# EUROPÄISCHE PATENTSCHRIFT

(11) **EP 4 433 354 B1**
(45) Veröffentlichungstag und Bekanntmachung des Hinweises auf die Patenterteilung: **27.05.2026**
(21) Anmeldenummer: 22813550.5
(22) Anmeldetag: 07.11.2022
(51) Int. Cl.: B62M 6/45, B62J 27/00, B62J 45/41

(54) **VERFAHREN ZUR WARTUNG EINES ELEKTROFAHRRADS**
PROCESS FOR THE MAINTENANCE OF AN ELECTRIC BICYCLE
PROCÉDURE D'ENTRETIEN D'UN VÉLO ÉLECTRIQUE

(30) Priorität: 19.11.2021 DE 102021213020
(43) Veröffentlichungstag der Anmeldung: 25.09.2024
(73) Patentinhaber: Robert Bosch GmbH, 70442 Stuttgart (DE)
(72) Erfinder: WEINMANN, Matthias, 72336 Balingen (DE); BAUMGAERTNER, Daniel, 72072 Tuebingen (DE)
(86) Internationale Anmeldenummer: PCT/EP2022/080924
(87) Internationale Veröffentlichungsnummer: WO 2023/088706

(56) Entgegenhaltungen:
- WO-A1-2014/111186
- MIKE RIDES MTB: "E-MTB WERKSTATT HACK 2021{EINFACH das SCHALTWERK einstellen] OHNE die KURBEL zu drehen? SHIMANO EP 8", 28 February 2021 (2021-02-28), XP093281603, Retrieved from the Internet <URL:https://www.youtube.com/watch?v=_KzPNcz6T_c> [retrieved on 20250527]

## Beschreibung

### Stand der Technik

Die vorliegende Erfindung betrifft ein Verfahren zur Wartung eines Elektrofahrrads.

Das Dokument WO 2014/111186 A1 offenbart ein gattungsgemäßes Verfahren zur Wartung eines Fahrrads.

Bekannt sind Elektrofahrräder, welche Elektromotoren aufweisen, die zur Unterstützung einer manuellen Tretkraft eines Fahrers durch ein mittels des Elektromotors erzeugtes Drehmoment vorgesehen sind. Zur Wartung derartiger Elektrofahrräder, beispielsweise zum Ölen einer Fahrradkette oder zum Einstellen einer Schaltung, erfolgt dabei häufig eine manuelle Betätigung der entsprechenden Komponenten des Elektrofahrrads durch eine Bedienperson.

### Offenbarung der Erfindung

Das erfindungsgemäße Verfahren mit den Merkmalen des Anspruchs 1 zeichnet sich demgegenüber dadurch aus, dass eine besonders einfache und zeiteffiziente Wartung eines Elektrofahrrads durchgeführt werden kann. Insbesondere kann dabei eine Motorunterstützung aktiv genutzt werden, um Wartungsschritte zu erleichtern. Dies wird erfindungsgemäß erreicht durch ein Verfahren zur Wartung eines Elektrofahrrads, welches die Schritte umfasst: Aktivieren eines Wartungsmodus einer Antriebseinheit des Elektrofahrrads im Ansprechen auf ein Aktivierungssignal, und Betreiben der Antriebseinheit in dem Wartungsmodus im Ansprechen auf eine einmalige Nutzereingabe mittels einer Eingabeeinheit. Während des Wartungsmodus steht das Elektrofahrrad dabei relativ zu einer Umgebung still.

Insbesondere ist die Antriebseinheit als einen Elektromotor ausgebildet, und vorzugsweise eingerichtet, zur Unterstützung einer manuellen Tretkraft eines Fahrers des Elektrofahrrads durch ein Motormoment während eines Fahrbetriebs des Elektrofahrrads. Insbesondere ist die Antriebseinheit dabei eingerichtet, das Motormoment in dem Fahrbetrieb des Elektrofahrrads ausschließlich dann zu erzeugen, wenn von dem Fahrer eine manuelle Tretkraft aufgebracht wird. Vorzugsweise wird ein Vortrieb des Elektrofahrrads durch die Antriebseinheit alleine verhindert.

Bei dem Verfahren wird, insbesondere zusätzlich zu einem Fahrbetrieb-Modus der Antriebseinheit, der Wartungsmodus bereitgestellt, in welchem eine Wartung des Elektrofahrrads vereinfacht durchgeführt werden kann. Der Wartungsmodus der Antriebseinheit kann dabei nur während eines Stillstands des Elektrofahrrads aktiv sein.

Bevorzugt kann der Stillstand des Elektrofahrrads relativ zur Umgebung aktiv erkannt werden, beispielsweise mittels eines Sensorsystems des Elektrofahrrads. Vorzugsweise kann der Wartungsmodus durch das Aktivierungssignal nur aktiviert werden im Ansprechen auf einen erkannten Stillstand des Elektrofahrrads. Alternativ bevorzugt kann das Betreiben der Antriebseinheit im Wartungsmodus nur so erfolgen, dass dadurch keine Fortbewegung des Elektrofahrrads möglich ist, beispielsweise durch ein niedriges Abtriebsdrehmoment.

Somit kann durch das Betreiben der Antriebseinheit im Wartungsmodus ein Motormoment, welches von der Antriebseinheit erzeugt werden kann, aktiv genutzt werden, insbesondere um Wartungsarbeiten zu erleichtern. Beispielsweise können durch das Betreiben der Antriebseinheit Teile eines Antriebsstrangs des Elektrofahrrads aktiv bewegt werden, um damit entsprechende Wartungsarbeiten zu vereinfachen.

Dadurch, dass das Betreiben der Antriebseinheit im Ansprechen auf eine einmalige Nutzereingabe mittels der Eingabeeinheit erfolgt, kann zudem eine für einen Nutzer besonders einfache Initiierung der Motor-unterstützten Wartung ermöglicht werden. Als einmalige Nutzereingabe wird dabei eine kurzzeitige Betätigung, beispielsweise ähnlich einer Betätigung eines Tasters, angesehen.

Das heißt, es ist keine dauerhafte Betätigung, beispielsweise durch dauerhafte Halten eines Knopfes oder dergleichen, erforderlich.

Die Eingabeeinheit kann dabei vielfältig ausgebildet sein. Beispielsweise kann die Eingabeeinheit in einen Bordcomputer des Elektrofahrrads integriert sein. Alternativ kann die Eingabeeinheit einen Schalter am Elektrofahrrad umfassen. Weiter alternativ kann die Eingabeeinheit ein Nutzergerät des Nutzers umfassen, wobei das Aktivierungssignal beispielsweise im Ansprechen auf eine Betätigung mittels einer Anwendung des Nutzergeräts und mittels einer Funkübertragung an das Elektrofahrrad übermittelt wird.

Die Unteransprüche haben bevorzugte Weiterbildungen der Erfindung zum Inhalt.

Bevorzugt erfolgt das Betreiben der Antriebseinheit in dem Wartungsmodus in einem ersten Betriebsmodus derart, dass eine Fahrradkette des Elektrofahrrads bewegt wird. Insbesondere wird somit mittels der Antriebseinheit ein Abtriebsmoment erzeugt, welches, insbesondere über ein mit der Antriebseinheit verbundenes Kettenblatt, die Fahrradkette bewegt. Dadurch kann eine Wartung der Fahrradkette und/oder einer Schaltung des Elektrofahrrads besonders einfach und komfortabel durchgeführt werden. Beispielsweise kann eine Bedienperson die Fahrradkette dadurch besonders komfortabel ölen.

Besonders bevorzugt wird das Betreiben der Antriebseinheit gestoppt, wenn die Fahrradkette einen vordefinierten Kettenweg durchlaufen hat. Als Kettenweg wird dabei ein Weg, den ein vordefinierter Punkt auf der Fahrradkette, beispielsweise ein Kettenglied, während des Bewegens der Kette zurücklegt. Vorzugsweise wird das Betreiben der Antriebseinheit gestoppt, wenn die Fahrradkette einen Kettenweg, der einer Gesamtlänge der Fahrradkette entspricht, durchlaufen hat. Das heißt, es wird durch das Betreiben der Kette bevorzugt genau eine komplette Umdrehung der Fahrradkette bewirkt. Dadurch ist eine Wartung der Fahrradkette, beispielsweise zum Reinigen und/oder Ölen, besonders einfach und komfortabel möglich. Bevorzugt hängt der zurückgelegte Kettenweg über eine Übersetzung zwischen Antriebseinheit und Fahrradkette, beispielsweise über ein Kettenblatt, mit der Rotation einer Abtriebswelle der Antriebseinheit zusammen. Beispielsweise kann dadurch die Abtriebswelle um eine vordefinierte Anzahl an Umdrehungen rotiert werden, um die Fahrradkette um den vordefinierten Kettenweg zu bewegen.

Vorzugsweise wird bei dem Verfahren ein, insbesondere akustisches und/oder optisches und/oder haptisches, Ausgabesignal erzeugt, wenn die Fahrradkette einen vordefinierten Kettenweg durchlaufen hat. Bevorzugt wird das Ausgabesignal erzeugt, wenn die Fahrradkette einen Kettenweg, der einer Gesamtlänge der Fahrradkette entspricht, durchlaufen hat. Das heißt, die Bedienperson kann nach beispielsweise genau einem gesamten Durchlauf der Fahrradkette anhand des Ausgabesignals einfach erkennen, welcher Anteil der Fahrradkette beispielsweise an einer bestimmten Stelle vorbei bewegt wurde.

Bevorzugt erfolgt das Betreiben der Antriebseinheit mit einem vorbestimmten Wartungs-Drehmoment, welches maximal 20 %, insbesondere maximal 10 %, vorzugsweise maximal 5 %, eines Maximaldrehmoments der Antriebseinheit beträgt. Insbesondere beträgt das Wartungs-Drehmoment maximal 5 Nm, bevorzugt maximal 2 Nm. Dadurch kann auf einfache Weise passiv verhindert werden, dass beispielsweise Gefährdungen für die Bedienperson entstehen und/oder das eine ungewollte Fortbewegung des Elektrofahrrads während des Wartungsmodus erfolgt.

Vorzugsweise erfolgt das Betreiben der Antriebseinheit mit einer vorbestimmten Wartungs-Drehzahl, welche maximal 20 %, insbesondere maximal 10 %, vorzugsweise maximal 5 %, einer Maximaldrehzahl der Antriebseinheit beträgt. Dadurch kann ähnlich dem vorangehenden Absatz auf einfache Weise passiv eine Gefährdung und/oder eine ungewollte Fortbewegung des Elektrofahrrads verhindert werden.

Weiter bevorzugt umfasst das Verfahren ferner die Schritte:
- Erkennen einer Blockade in einem Antriebsstrang des Elektrofahrrads, und
- Stoppen des Betreibens der Antriebseinheit im Ansprechen auf eine erkannte Blockade in dem Antriebsstrang.

Beispielsweise kann das Erkennen der Blockade basierend auf einer Drehmomentänderung und/oder einer Drehzahländerung der Antriebseinheit erfolgen. Durch das Stoppen können insbesondere Beschädigungen am Elektrofahrrad, und beispielsweise auch Gefährdungen der Bedienperson, vermieden werden. Als Antriebsstrang werden insbesondere sämtliche Bauteile des Elektrofahrrads angesehen, welche eine Drehmomenterzeugung und - übertragung ermöglichen, um ein Hinterrad des Elektrofahrrads anzutreiben.

Besonders bevorzugt wird durch das Bewegen der Fahrradkette ein Hinterrad des Elektrofahrrads rotiert. Das Verfahren umfasst dabei ferner einen oder mehrere der folgenden Schritte:
- automatische Diagnose eines Drehzahlsensors des Elektrofahrrads während des Rotierens des Hinterrads, wobei der Drehzahlsensor eingerichtet ist, eine Drehzahl des Hinterrads zu erfassen,
- automatische Diagnose eines Antiblockier-Systems des Elektrofahrrads durch Betätigen des Antiblockier-Systems während des Rotierens des Hinterrads, insbesondere wobei das Betätigen des Antiblockier-Systems durch Betätigen einer Hinterradbremse erfolgt,
- automatische Diagnose einer Schaltung des Elektrofahrrads durch Betätigen der Schaltung während des Rotierens des Hinterrads,
- automatisches Justieren der Schaltung des Elektrofahrrads durch Betätigen der Schaltung während des Rotierens des Hinterrads.

Als automatische Diagnose wird insbesondere jeweils eine selbsttätig durch das Elektrofahrrad, beispielsweise durch eine Steuereinheit des Elektrofahrrads, durchgeführte Überprüfung der Funktion durchgeführt. Beispielsweise können dabei Sensordaten erfasst und mit Kalibrier-Sensordaten, welche einen funktionsfähigen Zustand widerspiegeln, verglichen werden. Bei einer Abweichung kann beispielsweise ein Defekt erkannt werden.

Weiter bevorzugt weist die Antriebseinheit einen Rotor und einen Stator auf, wobei das Betreiben der Antriebseinheit in dem Wartungsmodus in einem zweiten Betriebsmodus derart erfolgt, um den Rotor zu drehen, ohne dass ein Abtriebsdrehmoment durch die Antriebseinheit erzeugt wird. Beispielsweise kann hierbei ein Freilauf zwischen Rotor und Abtriebswelle und/oder Kettenblatt aktiviert sein. Dadurch können weitere Betriebsfunktionen der Antriebseinheit ebenfalls auf einfache Weise überprüft und/oder angepasst werden.

Besonders bevorzugt erfolgt das Betreiben der Antriebseinheit in dem Wartungsmodus in einem dritten Betriebsmodus durch ein Betätigen der Antriebseinheit mit einem vorbestimmten Diagnose-Strom, ohne dass ein Abtriebsdrehmoment durch die Antriebseinheit erzeugt wird. Beispielsweise kann die Antriebseinheit dabei mit einem Diagnose-Strom derart beaufschlagt werden, dass der Rotor sich nicht dreht. Insbesondere kann dadurch eine automatische Überprüfung einer Stromversorgung der Antriebseinheit vorgenommen werden.

Vorzugsweise umfasst das Verfahren ferner die Schritte:
- Erfassen einer Stromaufnahme der Antriebseinheit während des Betreibens der Antriebseinheit, insbesondere in dem zweiten oder dritten Betriebsmodus, und
- Erkennen eines Defekts der Antriebseinheit basierend auf der erfassten Stromaufnahme.

Beispielsweise kann das Erkennen eines Defekts durch Vergleichen der erfassten Stromaufnahme mit einer Soll-Stromaufnahme erfolgen. Somit kann eine automatische Diagnose der Antriebseinheit auf besonders einfache Weise und für die Bedienperson komfortabel durchgeführt werden.

Bevorzugt ist das Aktivierungssignal mittels einer Nutzereingabe mittels der Eingabeeinheit erzeugbar. Beispielsweise kann die Bedienperson den Wartungsmodus somit mittels Knopfdruck oder dergleichen aktivieren. Alternativ oder zusätzlich bevorzugt wird das Aktivierungssignal, insbesondere automatisch, im Ansprechen auf eine Sensor-basierte Erkennung einer Wartungssituation erzeugt. Beispielsweise kann die Wartungssituation im Ansprechen auf vordefinierte Beschleunigungen und/oder Orientierungen des Elektrofahrrads erkannt werden. Alternativ oder zusätzlich bevorzugt wird das Aktivierungssignal im Ansprechen auf eine Verbindung des Elektrofahrrads, insbesondere einer Steuereinheit und/oder der Antriebseinheit des Elektrofahrrads, mit einer Wartungs-Einrichtung erzeugt. Die Wartungs-Einrichtung kann vorzugsweise ein Computer sein, mittels welchem beispielsweise Sensordaten des Elektrofahrrads ausgelesen werden können und/oder mittels welchem das Elektrofahrrad beispielsweise konfiguriert werden kann.

Vorzugsweise wird die Wartungssituation im Ansprechen auf eine Sensor-basierte Überkopf-Erkennung des Elektrofahrrads erkannt, beispielsweise basierend auf Beschleunigungssensoren und/oder Lagesensoren des Elektrofahrrads. Das heißt, wenn erkannt wird, dass das Elektrofahrrad in eine Überkopf-Orientierung gebracht wird, wird der Wartungsmodus automatisch aktiviert.

Bevorzugt umfasst das Verfahren ferner die Schritte:
- Erkennen einer Fortbewegung des Elektrofahrrads relativ zur Umgebung, und
- Verhindern des Betreibens der Antriebseinheit, wenn während der Wartungsmodus aktiv ist eine Fortbewegung des Elektrofahrrads erkannt wurde. Insbesondere kann somit auf einfache Weise verhindert werden, dass das Antriebsmoment der Antriebseinheit unerwünscht für eine Fortbewegung des Fahrrads genutzt werden kann. Beispielsweise können dadurch auch Schäden oder Gefährdungen vermieden werden.

Weiter bevorzugt erfolgt das Erkennen der Fortbewegung des Elektrofahrrads basierend auf einer Drehzahl eines nicht-angetriebenen Rats, beispielsweise eines Vorderrads, des Elektrofahrrads, und/oder basierend auf Ortsdaten und/oder basierend auf Bewegungsdaten eines Sensorsystems des Elektrofahrrads.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:

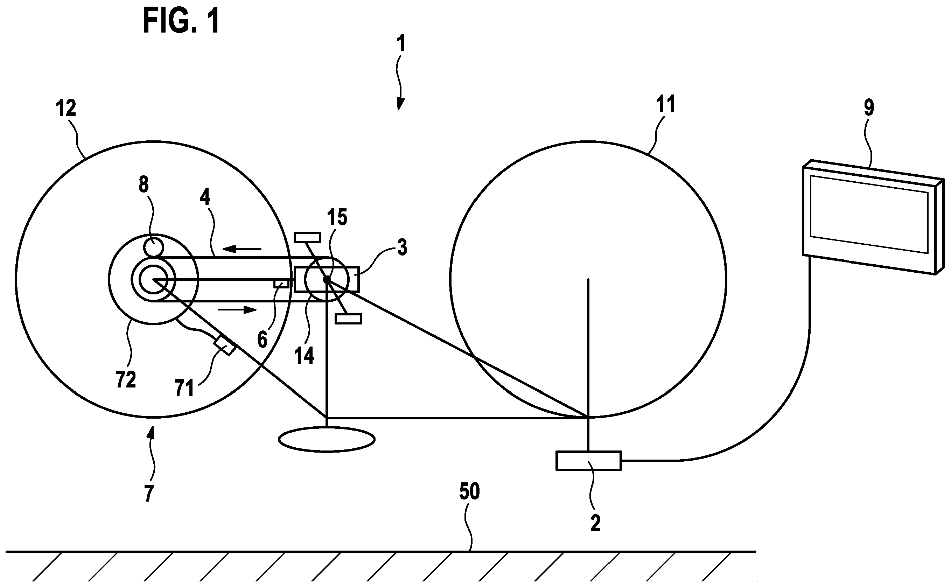

- Figur 1: eine vereinfachte schematische Ansicht Verfahrens zur Wartung eines Elektrofahrrads gemäß einem bevorzugten Ausführungsbeispiel der Erfindung.

### Bevorzugte Ausführungsform der Erfindung

Figur 1 zeigt stark vereinfachte schematische Ansicht eines Verfahrens zur Wartung eines Elektrofahrrads 1 gemäß einem bevorzugten Ausführungsbeispiel der Erfindung.

Das Elektrofahrrad 1 umfasst eine Antriebseinheit 3, welche im Bereich eines Tretlagers 15 angeordnet ist. Die Antriebseinheit 3 ist ein Elektromotor, welcher eingerichtet ist, um eine manuelle Tretkraft eines Fahrers des Elektrofahrrads 1 mittels eines Antriebsmoments motorisch zu unterstützen. In einem Fahrbetrieb des Elektrofahrrads 1 wird das Antriebsmoment der Antriebseinheit 3 nur dann bereitgestellt, wenn der Fahrer gleichzeitig pedaliert, was beispielsweise mittels eines Tretsensors erfasst werden kann.

Das Elektrofahrrad 1 umfasst außerdem ein Kettenblatt 14, welches von der Antriebseinheit 3 antreibbar ist, eine Fahrradkette 4 und eine Schaltung 8. Über die Fahrradkette 4 und die Schaltung 8 wird ein Hinterrad 12 des Elektrofahrrads 1 angetrieben.

Ferner umfasst das Elektrofahrrad 1 ein Antiblockier-System 7, welches eine Antiblockier-Einheit 71 und einen Hinterradbremssattel 72 aufweist. Beispielsweise ist das Antiblockier-System 7 Teil eines hydraulischen Bremssystems des Elektrofahrrads 1. Die Antiblockier-Einheit 71 ist dabei eingerichtet, um in einem Antiblockier-Betrieb einen Fluiddruck am Hinterradbremssattel 72 zu modulieren, um ein Blockieren des Hinterrads 12 bei einer Bremsung zu verhindern.

Um eine einfache und komfortable Wartung des Elektrofahrrads 1 zu ermöglichen, wird das erfindungsgemäße Verfahren bereitgestellt.

Bei dem Verfahren wird zunächst im Ansprechen auf ein Aktivierungssignal ein Wartungsmodus der Antriebseinheit 3 aktiviert.

Das Aktivierungssignal kann dabei auf verschiedene Weise erzeugt werden. Beispielsweise kann das Aktivierungssignal erzeugt werden, wenn wie in der Figur 1 dargestellt, eine Eingabeeinheit 2, welche beispielsweise ein Bordcomputer sein kann, mit einer Wartungs-Einrichtung 9 verbunden wird. Die Wartungs-Einrichtung 9 kann beispielsweise eine Diagnose-Software umfassen, zur Diagnose des Elektrofahrrads 1 oder Bauteilen davon.

Weiterhin kann das Aktivierungssignal automatisch erzeugt werden, wenn eine Wartungssituation mittels Sensoren des Elektrofahrrads 1 erkannt wird. Beispielsweise kann einen Lagesensor erfassen, wenn das Elektrofahrrad 1 in eine Überkopf-Position wie in der Figur 1 dargestellt gebracht wird, und im Ansprechen darauf das Aktivierungssignal erzeugen. Die Überkopf-Position ist dadurch gekennzeichnet, dass das Elektrofahrrad 1 bezüglich einer Umgebung 50 und einer Gravitationsrichtung eines Erdschwerefelds umgekehrt im Vergleich zu einer Fahr-Position ausgerichtet ist.

Ferner kann das Aktivierungssignal durch eine Nutzereingabe erzeugt werden. Beispielsweise kann die Nutzereingabe über die Eingabeeinheit 2 erfolgen.

Alternativ zu der in Figur 1 dargestellten Konfiguration, in welcher die Eingabeeinheit 2 am Elektrofahrrad 1 befestigt ist, kann die Eingabeeinheit 2 auch Teil eines Nutzergeräts, wie beispielsweise eines Smartphones, sein. Ein Nutzergerät kann das Aktivierungssignal beispielsweise mittels einer Funkübertragung an das Elektrofahrrad 1 übermitteln.

Bei aktiviertem Wartungsmodus kann im Ansprechen auf eine einmalige Nutzereingabe mittels der Eingabeeinheit 2 ein Betreiben der Antriebseinheit 3 initiiert werden. Das heißt, dass beispielsweise nach einmaligem Drücken eines Knopfes die Antriebseinheit 3 betrieben wird, vorzugsweise bis zu einem erneuten Drücken des Knopfes oder bis eine Bedingung zum Beenden des Betriebs der Antriebseinheit 3 eintritt.

Das Betreiben der Antriebseinheit 3 kann dabei in verschiedenen Betriebsmodi erfolgen. In einem ersten Betriebsmodus wird die Antriebseinheit 3 derart betrieben, dass die Fahrradkette 4 bewegt wird.

Das Bewegen der Fahrradkette 4 kann dabei so erfolgen, dass das Hinterrad 12 rotiert wird. Während der Rotation des Hinterrads 12 können verschiedene Schritte durchgeführt werden. Insbesondere können automatische Diagnosen, also Funktionstests, verschiedener Komponenten des Elektrofahrrads 1 durchgeführt werden.

Vorzugsweise erfolgt eine automatische Diagnose eines Drehzahlsensors 6, der eingerichtet ist, eine Drehzahl des Hinterrads 12 zu erfassen. Beispielsweise kann dies durch einfaches Plausibilisieren eines Drehzahlwertes erfolgen. Alternativ oder zusätzlich kann durch vordefinierte Betätigung der Antriebseinheit 3 und der Schaltung 8 eine vordefinierte Drehzahl des Hinterrads 12 eingestellt werden, und der gemessene Drehzahlwert des Drehzahlsensor 6 mit einem Soll-Drehzahlwert verglichen werden.

Weiterhin kann eine Diagnose des Antiblockier-Systems 7 erfolgen. Beispielsweise kann dabei eine Funktion des Antiblockier-Systems 7 geprüft werden, indem während der Rotation des Hinterrads 12 der Hinterradbremssattel 72 betätigt und eine sich darauf einstellende Verzögerung der Rotation des Hinterrads 12 ermittelt wird.

Zusätzlich kann eine automatische Diagnose der Schaltung 8 des Elektrofahrrads 1 erfolgen. Vorteilhafterweise ist die Schaltung 8 dabei eine elektronische Schaltung, welche insbesondere durch eine Steuereinheit des Elektrofahrrads 1 betätigbar ist. Beispielsweise kann zur Diagnose der Schaltung 8 eine vorbestimmte Übersetzung automatisch eingestellt werden, und basierend auf einer erfassten Drehzahl des Hinterrads 12 eine Abweichung von einer bei der vorbestimmten Übersetzung zu erwartenden Drehzahl überprüft werden.

Ferner kann eine automatische Justierung, das heißt Einstellung, der Schaltung 8 erfolgen. Beispielsweise kann die Justierung durch ein mittels einer Steuereinheit des Elektrofahrrads 1 gesteuertes Verstellen eines Schaltmechanismus erfolgen, um eine Schaltfunktion zu optimieren.

Weiterhin kann in dem ersten Betriebsmodus das Betreiben der Antriebseinheit 3 derart erfolgen, dass der Betrieb gestoppt wird, wenn die Fahrradkette 4 einen vordefinierten Kettenweg durchlaufen hat. Beispielsweise kann das Betreiben der Antriebseinheit 3 stoppen, wenn die Fahrradkette 4 genau eine Umdrehung durchlaufen hat. Dadurch kann insbesondere eine Wartung der Fahrradkette 4, wie beispielsweise ein Reinigen oder Ölen, für die Bedienperson besonders einfach und komfortabel durchgeführt werden.

Alternativ kann anstatt des Stoppens des Betreibens der Antriebseinheit 3 ein Ausgabesignal erzeugt werden, wenn die Fahrradkette 4 einen vordefinierten Kettenweg durchlaufen hat, also beispielsweise genau eine Umdrehung. Ein derartiges Ausgabesignal kann beispielsweise ein akustisches und/oder optisches und/oder haptisches Ausgabesignal sein.

Weiterhin kann die Antriebseinheit 3 in dem Wartungsmodus in einem zweiten Betriebsmodus betrieben werden. In dem zweiten Betriebsmodus erfolgt ein Betreiben der Antriebseinheit 3 derart, dass ein Rotor der Antriebseinheit 3 gedreht wird, ohne dass dabei ein Abtriebsdrehmoment durch die Antriebseinheit 3 erzeugt wird. Dadurch kann beispielsweise eine korrekte Funktion des elektromotorischen Betriebs der Antriebseinheit 3 überprüft werden.

In dem zweiten Betriebsmodus kann zudem durch Erfassen einer Stromaufnahme der Antriebseinheit während des Betreibens basierend auf dieser erfassten Stromaufnahme ein Defekt der Antriebseinheit 3 erkannt werden.

Ferner kann die Antriebseinheit 3 in einem dritten Betriebsmodus innerhalb des Wartungsmodus betrieben werden. In dem dritten Betriebsmodus erfolgt ein Betätigen der Antriebseinheit 3 mit einem vorbestimmten Diagnose-Strom, ohne dass die Antriebseinheit 3 ein Abtriebsdrehmoment erzeugt, und insbesondere ohne dass der Rotor in Rotation versetzt wird. In dem dritten Betriebsmodus kann ebenfalls durch Erfassen der Stromaufnahme ein Defekt der Antriebseinheit 3 erkannt werden.

Während der Wartungsmodus der Antriebseinheit 3 aktiv ist, ist ein maximales Abtriebsdrehmoment der Antriebseinheit 3 auf ein vorbestimmtes Wartungs-Drehmoment limitiert. Das Wartungs-Drehmoment ist dabei auf maximal 20 % eines Maximaldrehmoments der Antriebseinheit 3 im normalen Fahrbetrieb begrenzt. Dadurch kann eine unbeabsichtigte Fortbewegung des Elektrofahrrads 1 vermieden werden und außerdem kann die Wahrscheinlichkeit von Gefährdungen der Bedienperson durch den Betrieb der Antriebseinheit 3 möglichst reduziert werden.

Analog ist eine maximale Drehzahl der Antriebseinheit 3 während des Wartungsmodus auf eine Wartungs-Drehzahl begrenzt, welche maximal 20 % einer Maximaldrehzahl der Antriebseinheit 3 im normalen Fahrbetrieb beträgt.

Eine Deaktivierung des Wartungsmodus ist auf verschiedene Weise möglich. Beispielsweise kann dies durch ein Deaktivierungssignal initiiert werden, welches vorzugsweise wie das Aktivierungssignal mittels einer Nutzereingabe erzeugt werden kann.

Alternativ kann eine Deaktivierung des Wartungsmodus, oder auch eine Verhinderung des Wartungsmodus von vornherein in bestimmten Situationen automatisch verhindert werden. Beispielsweise wenn erkannt wird, dass das Elektrofahrrad 1 sich relativ zur Umgebung 50 fortbewegt, kann eine solche automatische Deaktivierung oder Verhinderung erfolgen. Eine derartige Fortbewegung des Elektrofahrrads 1 kann beispielsweise anhand einer Drehzahl eines nicht-angetriebenen Vorderrads 11 des Elektrofahrrads 1 erfolgen. Alternativ oder zusätzlich kann eine Fortbewegung basierend auf Ortsdaten und/oder Bewegungsdaten einer Sensorik des Elektrofahrrads 1 erkannt werden.

## Patentansprüche

1. Verfahren zur Wartung eines Elektrofahrrads (1), umfassend die Schritte:
- Aktivieren eines Wartungsmodus einer Antriebseinheit (3) des Elektrofahrrads (1) im Ansprechen auf ein Aktivierungssignal,
- wobei das Elektrofahrrad (1) während des Wartungsmodus relativ zu einer Umgebung (50) stillsteht, **gekennzeichnet durch** den Schritt:
- Betreiben der Antriebseinheit (3) in dem Wartungsmodus im Ansprechen auf eine einmalige Nutzereingabe mittels einer Eingabeeinheit (2).

2. Verfahren nach Anspruch 1, wobei das Betreiben der Antriebseinheit (3) in einem ersten Betriebsmodus derart erfolgt, um eine Fahrradkette (4) des Elektrofahrrads (1) zu bewegen.

3. Verfahren nach Anspruch 2, wobei das Betreiben der Antriebseinheit (3) gestoppt wird, wenn die Fahrradkette (4) einen vordefinierten Kettenweg durchlaufen hat.

4. Verfahren nach einem der Ansprüche 2 oder 3, ferner umfassend den Schritt:
- Erzeugen eines, insbesondere akustischen und/oder optischen und/oder haptischen, Ausgabesignals, wenn die Fahrradkette (4) einen vordefinierten Kettenweg durchlaufen hat.

5. Verfahren nach einem der Ansprüche 2 bis 4, wobei das Betreiben der Antriebseinheit (3) mit einem vorbestimmten Wartungs-Drehmoment erfolgt, welches maximal 20 %, insbesondere maximal 10 %, vorzugsweise maximal 5 %, eines Maximaldrehmoments der Antriebseinheit (3) beträgt.

6. Verfahren nach einem der Ansprüche 2 bis 5, wobei das Betreiben der Antriebseinheit (3) mit einer vorbestimmten Wartungs-Drehzahl erfolgt, welche maximal 20 %, insbesondere maximal 10 %, vorzugsweise maximal 5 %, einer Maximaldrehzahl der Antriebseinheit (3) beträgt.

7. Verfahren nach einem der Ansprüche 2 bis 6, ferner umfassend die Schritte:
- Erkennen einer Blockade in einem Antriebsstrang des Elektrofahrrads (1), und
- Stoppen des Betreibens der Antriebseinheit (3) im Ansprechen auf eine erkannte Blockade in dem Antriebsstrang.

8. Verfahren nach einem der Ansprüche 2 bis 7, wobei durch das Bewegen der Fahrradkette (4) ein Hinterrad (12) des Elektrofahrrads (1) rotiert wird, und wobei das Verfahren ferner einen oder mehrere der folgenden Schritte umfasst:
- automatische Diagnose eines Drehzahlsensors (6) des Elektrofahrrads (1) während des Rotierens des Hinterrads (12), wobei der Drehzahlsensor (6) eingerichtet ist, eine Drehzahl des Hinterrads (12) zu erfassen,
- automatische Diagnose eines Antiblockier-Systems (7) des Elektrofahrrads (1) durch Betätigen des Antiblockier-Systems (7) während des Rotierens des Hinterrads (12),
- automatische Diagnose einer Schaltung (8) des Elektrofahrrads (1) durch Betätigen der Schaltung (8) während des Antreibens der Antriebseinheit (3),
- automatisches Justieren der Schaltung (8) des Elektrofahrrads (1) durch Betätigen der Schaltung (8) während des Antreibens der Antriebseinheit (3).

9. Verfahren nach einem der vorhergehenden Ansprüche, wobei die Antriebseinheit (3) einen Rotor und einen Stator aufweist, und wobei das Betreiben der Antriebseinheit (3) in einem zweiten Betriebsmodus derart erfolgt, um den Rotor zu drehen, ohne dass ein Abtriebsdrehmoment durch die Antriebseinheit (3) erzeugt wird.

10. Verfahren nach einem der vorhergehenden Ansprüche, wobei das Betreiben der Antriebseinheit (3) in einem dritten Betriebsmodus durch Betätigen der Antriebseinheit (3) mit einem vorbestimmten Diagnose-Strom erfolgt, ohne dass ein Abtriebsdrehmoment durch die Antriebseinheit (3) erzeugt wird.

11. Verfahren nach einem der Ansprüche 9 oder 10, ferner umfassend den Schritt:
- Erfassen einer Stromaufnahme der Antriebseinheit (3) während des Betreibens der Antriebseinheit (3), und
- Erkennen eines Defekts der Antriebseinheit (3) basierend auf der erfassten Stromaufnahme.

12. Verfahren nach einem der vorhergehenden Ansprüche,
- wobei das Aktivierungssignal mittels einer Nutzereingabe mittels der Eingabeeinheit (2) erzeugbar ist, und/oder
- wobei das Aktivierungssignal im Ansprechen auf eine Sensor-basierte Erkennung einer Wartungssituation erzeugt wird, und/oder
- wobei das Aktivierungssignal im Ansprechen auf eine Verbindung des Elektrofahrrads (1) mit einer Wartungs-Einrichtung (9) erzeugt wird.

13. Verfahren nach Anspruch 12, wobei die Wartungssituation im Ansprechen auf eine Sensor-basierte Überkopf-Erkennung des Elektrofahrrads (1) erkannt wird.

14. Verfahren nach einem der vorhergehenden Ansprüche, ferner umfassend die Schritte:
- Erkennen einer Fortbewegung des Elektrofahrrads (1) relativ zur Umgebung (50), und
- Verhindern des Betreibens der Antriebseinheit (3), wenn eine Fortbewegung des Elektrofahrrads (1) erkannt wurde während des Wartungsmodus aktiv ist.

15. Verfahren nach Anspruch 14, wobei das Erkennen der Fortbewegung des Elektrofahrrads (1) basierend auf einer Erfassung einer Drehzahl eines nicht-angetriebenen Rads (11) des Elektrofahrrads (1) und/oder basierend auf Orts- und/oder Bewegungsdaten eines Sensorsystems des Elektrofahrrads (1) erfolgt.

## Claims

1. Method for maintaining an electric bicycle (1), comprising the steps of:
- activating a maintenance mode of a drive unit (3) of the electric bicycle (1) in response to an activation signal,
- wherein the electric bicycle (1) is stationary relative to an environment (50) during the maintenance mode, **characterized by** the step of:
- operating the drive unit (3) in the maintenance mode in response to a single user input by means of an input unit (2).

2. Method according to Claim 1, wherein operation of the drive unit (3) in a first operating mode is performed in such a way as to move a bicycle chain (4) of the electric bicycle (1).

3. Method according to Claim 2, wherein operation of the drive unit (3) is stopped when the bicycle chain (4) has passed through a predefined chain path.

4. Method according to either of Claims 2 and 3, further comprising the step of:
- generating an, in particular acoustic and/or optical and/or haptic, output signal when the bicycle chain (4) has passed through a predefined chain path.

5. Method according to any of Claims 2 to 4, wherein operation of the drive unit (3) is performed with a predetermined maintenance torque, which is at most 20%, in particular at most 10%, preferably at most 5%, a maximum torque of the drive unit (3).

6. Method according to any of Claims 2 to 5, wherein operation of the drive unit (3) is performed at a predetermined maintenance speed, which is at most 20%, in particular at most 10%, preferably at most 5%, a maximum speed of the drive unit (3).

7. Method according to any of Claims 2 to 6, further comprising the steps of:
- identifying a blockage in a drive train of the electric bicycle (1), and
- stopping operation of the drive unit (3) in response to an identified blockage in the drive train.

8. Method according to any of Claims 2 to 7, wherein a rear wheel (12) of the electric bicycle (1) is rotated by moving the bicycle chain (4), and wherein the method further comprises one or more of the following steps:
- automatically diagnosing a speed sensor (6) of the electric bicycle (1) while the rear wheel (12) is rotating, wherein the speed sensor (6) is configured to detect a speed of the rear wheel (12),
- automatically diagnosing an anti-lock braking system (7) of the electric bicycle (1) by actuating the anti-lock braking system (7) while the rear wheel (12) is rotating,
- automatically diagnosing a gearing system (8) of the electric bicycle (1) by actuating the gearing system (8) while the drive unit (3) is driving,
- automatically adjusting the gearing system (8) of the electric bicycle (1) by actuating the gearing system (8) while the drive unit (3) is driving.

9. Method according to any of the preceding claims, wherein the drive unit (3) has a rotor and a stator, and wherein operation of the drive unit (3) in a second operating mode is performed in such a way as to rotate the rotor without an output torque being generated by the drive unit (3).

10. Method according to any of the preceding claims, wherein operation of the drive unit (3) in a third operating mode is performed by actuating the drive unit (3) with a predetermined diagnostic current without an output torque being generated by the drive unit (3).

11. Method according to either of Claims 9 and 10, further comprising the step of:
- detecting a current consumption by the drive unit (3) while the drive unit (3) is operating, and
- identifying a defect in the drive unit (3) based on the current consumption detected.

12. Method according to any of the preceding claims,
- wherein the activation signal can be generated by means of a user input by means of the input unit (2), and/or
- wherein the activation signal is generated in response to sensor-based identification of a maintenance situation, and/or
- wherein the activation signal is generated in response to a connection between the electric bicycle (1) and a maintenance device (9).

13. Method according to Claim 12, wherein the maintenance situation is identified in response to sensor-based overhead identification of the electric bicycle (1).

14. Method according to any of the preceding claims, further comprising the steps of:
- identifying movement of the electric bicycle (1) relative to the environment (50), and
- preventing operation of the drive unit (3) when movement of the electric bicycle (1) has been identified while the maintenance mode is active.

15. Method according to Claim 14, wherein identification of the movement of the electric bicycle (1) is performed based on detection of a speed of a nondriven wheel (11) of the electric bicycle (1) and/or based on location and/or movement data from a sensor system of the electric bicycle (1).

## Revendications

1. Procédé d'entretien d'un vélo électrique (1), comprenant les étapes suivantes :
- activation d'un mode d'entretien d'une unité d'entraînement (3) du vélo électrique (1) en réponse à un signal d'activation,
- le vélo électrique (1) étant à l'arrêt par rapport à un environnement (50) pendant le mode d'entretien, **caractérisé par** l'étape :
- fonctionnement de l'unité d'entraînement (3) dans le mode d'entretien en réponse à une seule entrée utilisateur au moyen d'une unité d'entrée (2).

2. Procédé selon la revendication 1, le fonctionnement de l'unité d'entraînement (3) dans un premier mode de fonctionnement étant effectué de manière à déplacer une chaîne (4) de vélo du vélo électrique (1).

3. Procédé selon la revendication 2, le fonctionnement de l'unité d'entraînement (3) étant arrêté lorsque la chaîne (4) de vélo a parcouru un trajet de chaîne prédéfini.

4. Procédé selon l'une des revendications 2 à 3, comprenant en outre l'étape :
- génération d'un signal de sortie, en particulier acoustique et/ou optique et/ou haptique, lorsque la chaîne (4) de vélo a parcouru un trajet de chaîne prédéfini.

5. Procédé selon l'une des revendications 2 à 4, l'unité d'entraînement (3) fonctionnant avec un couple de rotation d'entretien prédéfini, qui est au maximum de 20 %, en particulier au maximum de 10 %, de préférence au maximum de 5 %, d'un couple de rotation maximal de l'unité d'entraînement (3).

6. Procédé selon l'une des revendications 2 à 5, l'unité d'entraînement (3) fonctionnant à une vitesse de rotation d'entretien prédéfinie, qui est au maximum de 20 %, en particulier au maximum de 10 %, de préférence au maximum de 5 %, d'une vitesse de rotation maximale de l'unité d'entraînement (3).

7. Procédé selon l'une des revendications 2 à 6, comprenant en outre les étapes :
- identification d'un blocage dans une chaîne cinématique du vélo électrique (1), et
- arrêt du fonctionnement de l'unité d'entraînement (3) en réponse à un blocage identifié dans la chaîne cinématique.

8. Procédé selon l'une des revendications 2 à 7, une roue arrière (12) du vélo électrique (1) étant tournée en déplaçant la chaîne (4) de vélo, et le procédé comprenant en outre une ou plusieurs des étapes suivantes :
- diagnostic automatique d'un capteur de vitesse de rotation (6) du vélo électrique (1) pendant la rotation de la roue arrière (12), le capteur de vitesse de rotation (6) étant mis au point pour détecter une vitesse de rotation de la roue arrière (12),
- diagnostic automatique d'un système antiblocage (7) du vélo électrique (1) en actionnant le système antiblocage (7) pendant la rotation de la roue arrière (12),
- diagnostic automatique d'un circuit (8) du vélo électrique (1) en actionnant le circuit (8) pendant l'entraînement de l'unité d'entraînement (3),
- ajustement automatique du circuit (8) du vélo électrique (1) en actionnant le circuit (8) pendant l'entraînement de l'unité d'entraînement (3).

9. Procédé selon l'une des revendications précédentes, l'unité d'entraînement (3) comportant un rotor et un stator, et l'unité d'entraînement (3) fonctionnant dans un deuxième mode de fonctionnement de manière à faire tourner le rotor sans qu'un couple de rotation de sortie ne soit généré par l'unité d'entraînement (3).

10. Procédé selon l'une des revendications précédentes, l'unité d'entraînement (3) fonctionnant dans un troisième mode de fonctionnement en actionnant l'unité d'entraînement (3) avec un courant de diagnostic prédéfini sans qu'un couple de rotation de sortie ne soit généré par l'unité d'entraînement (3).

11. Procédé selon l'une des revendications 9 à 10, comprenant en outre l'étape :
- détection d'une consommation de courant de l'unité d'entraînement (3) pendant le fonctionnement de l'unité d'entraînement (3), et
- identification d'un défaut de l'unité d'entraînement (3) sur la base de la consommation de courant détectée.

12. Procédé selon l'une des revendications précédentes,
- le signal d'activation pouvant être généré au moyen d'une entrée utilisateur au moyen de l'unité d'entrée (2), et/ou
- le signal d'activation étant généré en réponse à une identification par capteur d'une situation d'entretien, et/ou
- le signal d'activation étant généré en réponse à un raccordement du vélo électrique (1) à un système d'entretien (9).

13. Procédé selon la revendication 12, la situation d'entretien étant identifiée en réponse à une identification aérienne par capteur du vélo électrique (1).

14. Procédé selon l'une des revendications précédentes, comprenant en outre les étapes :
- identification d'un déplacement du vélo électrique (1) par rapport à l'environnement (50), et
- empêchement du fonctionnement de l'unité d'entraînement (3) lorsqu'un déplacement du vélo électrique (1) a été identifié alors que le mode d'entretien est actif.

15. Procédé selon la revendication 14, le déplacement du vélo électrique (1) étant identifié sur la base d'une détection d'une vitesse de rotation d'une roue non entraînée (11) du vélo électrique (1) et/ou sur la base de données de localisation et/ou de déplacement d'un système de détection du vélo électrique (1).
